# EUROPÄISCHE PATENTSCHRIFT

(11) **EP 3 120 203 B1**
(45) Veröffentlichungstag und Bekanntmachung des Hinweises auf die Patenterteilung: **11.08.2021**
(21) Anmeldenummer: 15710740.0
(22) Anmeldetag: 11.03.2015
(51) Int. Cl.: G05B 23/02

(54) **VORRICHTUNG SOWIE VERFAHREN ZUR FEHLERERKENNUNG IN MASCHINEN**
DEVICE AND METHOD FOR DETECTING ERRORS IN MACHINES
DISPOSITIF ET PROCÉDÉ SERVANT À IDENTIFIER DES ANOMALIES DANS DES MACHINES

(30) Priorität: 18.03.2014 DE 102014103688
(43) Veröffentlichungstag der Anmeldung: 25.01.2017
(73) Patentinhaber: KHS GmbH, 44143 Dortmund (DE)
(72) Erfinder: PREUSS, Rüdiger, 44797 Bochum (DE)
(86) Internationale Anmeldenummer: PCT/EP2015/055013
(87) Internationale Veröffentlichungsnummer: WO 2015/140015

(56) Entgegenhaltungen:
- US-A1- 2003 125 906
- US-A1- 2005 222 747
- US-A1- 2006 186 891
- US-A1- 2012 126 738
- US-B1- 6 260 004

## Beschreibung

Die Erfindung bezieht sich auf ein Verfahren zur Fehlererkennung in einer Maschine gemäß Oberbegriff Patentanspruch 1 sowie auf eine Vorrichtung zur Fehlererkennung in einer Maschine gemäß Oberbegriff Patentanspruch 135.

Zur vorausschauenden Wartung und Instandhaltung einer Maschine ist es bekannt, zur frühzeitigen Erkennung und Lokalisierung von Fehlern mechanische Schwingungen zu erfassen und diese auszuwerten. Dabei werden an definierten Stellen der Maschine Schwingungssensoren angebracht, die zur Erfassung der mechanischen Schwingungen ausgebildet sind. Durch diese Schwingungssensoren können auftretende Schwingungen erkannt werden, die Rückschlüsse auf Fehler an der Maschine bzw. auf durchzuführende Wartungen an derselben zulassen. Das Anbringen von Schwingungssensoren an der Maschine ist zum einen störungsanfällig, da die Schwingungssensoren leicht beschädigt werden können. Darüber hinaus bedeutet das Anbringen von Schwingungssensoren einen zusätzlichen Aufwand und ist damit teuer.

Weiterhin ist es bei elektrisch angetriebenen Vorrichtungen bekannt, Fehler dadurch zu erkennen, dass elektrische Messgrößen, insbesondere die elektrische Leistungsaufnahme charakterisierende Messgrößen, beispielsweise der von einer elektrischen Antriebseinheit aufgenommene elektrische Strom einen vorgesehenen Grenzwert überschreiten. Das aus dem Stand der Technik bekannte Verfahren beruht auf der Tatsache, dass bei Elektromotoren die Stromstärke des durch den Elektromotor fließenden elektrischen Stroms von der mechanischen Belastung des Elektromotors abhängt. So führt eine steigende mechanische Belastung des Elektromotors zu einem Anstieg der Stromstärke und -in umgekehrter Weise- eine sinkende mechanische Belastung zu einem Abfallen der Stromstärke. Somit zieht eine Veränderung der mechanischen Belastung eines Elektromotors eine Veränderung der Stromaufnahme dieses Motors nach sich.

Durch das aus dem Stand der Technik bekannte Verfahren zur Erkennung von Fehlern wird der Betrag der Stromstärke dahingehend überprüft, ob die Stromstärke einen definierten Schwellenwert übersteigt. Bei Übersteigen wird beispielsweise ein Fehlererkennungssignal an einer Überwachungseinrichtung ausgegeben. Nachteilig an dem bekannten Verfahren ist, dass Fehler an der Maschine zwar vor einem kompletten Maschinenstillstand erkennbar sind und damit eine ungeplante Produktionsunterbrechung möglicherweise vermeidbar ist, jedoch in der Regel an der Maschine bereits erhebliche mechanische Schäden entstanden sind, welche durch aufwändige und kostenintensive Reparaturen zu beheben sind.

Die Druckschrift US 2012/0126738 A1 offenbart ein Verfahren zur Überwachung des Zustands einer Maschine unter Verwendung eines Positionssensors. Der Positionssensor kann dabei ein Drehwinkelsensor sein. Die von diesem Drehwinkelsensor abgegebenen Signale werden dabei im Zeit- oder Frequenzbereich analysiert und im Hinblick auf Auffälligkeiten untersucht.

Ferner offenbart die Druckschrift US 2009/0309531 A1 ein Verfahren zur Fehlererkennung eines Servomotors.

Zuletzt offenbart die Druckschrift US 5,789,667 A eine Vorrichtung zum Testen eines Elektromotors.

Die Druckschrift US 2003/012906 A1 offenbart ein Verfahren und eine Vorrichtung zur Bewertung des Einflusses von Teilen einer Gasturbinenkomponente auf die gesamte thermische Leistungsfähigkeit einer Gasturbine.

Die Druckschrift US 2005/0222747 A1 offenbart eine modellbasierte Erkennung und Diagnose von Fehlern in Turbinenantrieben.

Ausgehend hiervon ist es Aufgabe der Erfindung, ein Verfahren zum Erkennen von Fehlern in einer Maschine anzugeben, mittels dem auftretende Schäden bereits frühzeitig erkannt werden können und dabei eine geplante Maschinenwartung bereits vor dem Auftreten von komplexen mechanischen Schäden durchgeführt werden kann. Die Erfindung wird ausgehend vom Oberbegriff des unabhängigen Patentanspruchs 1 durch dessen kennzeichnende Merkmale gelöst. Eine Vorrichtung zum Erkennen von Fehlern in Maschinen ist Gegenstand des nebengeordneten Patentanspruchs 13.

Die Erfindung betrifft zunächst ein Verfahren zur Erkennung von Fehlern in einer Maschine, wobei die Maschine zumindest eine elektrische, einen Rotor aufweisende Antriebseinheit zum Antrieb einer Baugruppe der Maschine aufweist. Der Antriebseinheit ist dabei ein Drehwinkelsensor zugeordnet, der zur Abgabe eines Messsignals bei Drehung des Rotors ausgebildet ist. Zur Fehlererkennung wird das vom Drehwinkelsensor abgegebene oder ein davon abgeleitetes Messsignal analysiert und hinsichtlich auf Fehler hinweisenden Auffälligkeiten ausgewertet. Diese Auswertung kann automatisiert durch eine Analyseeinheit oder durch Wartungspersonal erfolgen. Das Messsignal kann beispielsweise das direkt vom Drehwinkelsensor abgegebene Messsignal sein oder ein durch eine Verarbeitung des Signals, insbesondere durch eine Anwendung einer mathematischen Funktion oder eines mathematischen Algorithmus erhaltenes Messsignal. Das Verfahren ist vorteilhaft, da durch die Analyse des vom Drehwinkelsensor abgegebenen Signals Veränderungen der Belastung der Antriebseinheit erkannt werden können, und zwar ohne eine zusätzliche, an der Maschine vorgesehene Sensorik. Bevorzugt ist die Antriebseinheit ein Servomotor, der inhärenter Weise einen Drehwinkelsensor aufweist, dessen Signale im Servoregler zur gesteuerten Drehung des Rotors herangezogen werden.

In einem Ausführungsbeispiel wird das Messsignal durch Ableiten, d.h. durch Bildung des Differentialquotienten des vom Drehwinkelsensor abgegebenen Signals erhalten. Für den Fall, dass das Messsignal ein Winkelpositionssignal ist, d.h. der Wert des Messsignals direkt proportional zur Winkelstellung des Rotors ist, kann durch Ableiten die Winkelgeschwindigkeit des Rotors erhalten werden. Im Falle einer konstanten Drehgeschwindigkeit des Rotors ist das Messsignal ein sägezahnförmiges oder im Wesentlichen sägezahnförmiges Signal. Durch das Ableiten wird dann ein Gleichsignal erhalten, das sich im Folgenden leichter verarbeiten lässt. Insbesondere wird die spektrale Auswertung des Messsignals wesentlich erleichtert.

Das Messsignal kann im Zeitbereich und/oder im Frequenzbereich analysiert werden. Das Auswerten im Zeitbereich ist vorteilhaft, da das vom Drehwinkelsensor abgegebene Signal direkt analysiert werden kann und keine Transformation in den Frequenzbereich zu erfolgen hat. Die Analyse im Frequenzbereich hat den Vorteil, dass sich periodisch auftretende Schwankungen der Drehgeschwindigkeit des Rotors durch spektrale Überhöhungen an einer gewissen Frequenz äußern und damit leichter erkennbar sind.

Vorteilhaft wird das Messsignal im Zeitbereich oder im Frequenzbereich mit einem Referenzmesssignal verglichen und bei Abweichen des Messsignals vom Referenzmesssignal um eine Toleranzschwelle ein Fehlererkennungssignal erzeugt. Das Referenzmesssignal bildet beispielsweise eine Vergleichsgröße, mit dem das aktuell ermittelte Messsignal verglichen wird, um festzustellen, ob Auffälligkeiten, die auf einen Fehler hinweisen, vorliegen oder nicht. Die Toleranzschwelle bildet dabei ein Kriterium, mittels dem es möglich ist, festzustellen, ob eine Abweichung vorliegt, die als Fehler bewertet wird (Überschreiten der Toleranzschwelle) oder noch toleriert wird.

Bevorzugt umfasst die Maschine eine Vielzahl von Antriebseinheiten, wobei die von den Drehwinkelsensoren dieser Antriebseinheiten abgegebenen oder davon abgeleiteten Messsignale analysiert und hinsichtlich auf Fehler hinweisenden Auffälligkeiten ausgewertet werden. Damit wird sichergestellt, dass mehrere Antriebseinheiten gleichzeitig hinsichtlich eines fehlerhaften Verhaltens überwacht werden.

In einem bevorzugten Ausführungsbeispiel werden die Messsignale jeweils mit einem ihnen zugeordneten Referenzmesssignal verglichen, wobei bei Abweichen zumindest eines Messsignals von dem ihm zugeordneten Referenzmesssignal um eine Toleranzschwelle ein Fehlererkennungssignal und/oder ein die jeweilige Antriebseinheit charakterisierendes Lokalisierungssignal erzeugt wird. In Abhängigkeit von der Antriebseinheit, an der ein auffälliges bzw. atypische Messsignal erkannt wurde, kann eine Groblokalisierung des aufgetretenen Fehlers, d.h. eine örtliche Eingrenzung des Fehlers an der Maschine vorgenommen werden.

Bevorzugt wird das Messsignal kontinuierlich oder in regelmäßigen Zeitabständen analysiert. Damit kann fortlaufend oder nach Ablauf eines bestimmten Zeitintervalls das Messsignal oder ein davon abgeleitetes Messsignal mit dem Referenzmesssignal verglichen und ein möglicherweise auftretender Fehler erkannt werden. Ferner kann das aktuell ermittelte Messsignal gleichzeitig mit mehreren in der Vergangenheit ermittelten, insbesondere zu unterschiedlichen Zeitpunkten in der Vergangenheit ermittelten Referenzmesssignalen verglichen werden, d.h. die zeitliche Veränderung des Messsignals wird basierend auf mehreren in der Vergangenheit zu unterschiedlichen Zeitpunkten aufgenommenen Referenzmesssignalen ermittelt. Dadurch kann das Fortschreiten eines auftretenden Fehlers analysiert und das Fehlererkennungssignal abhängig vom Fortschreiten des Fehlers erzeugt werden.

In einem weiteren Ausführungsbeispiel ist das Referenzmesssignal ein im Neuzustand der Maschine aufgenommenes Referenzmesssignal ist. Alternativ ist das Referenzmesssignal ein Signal, das nach Verstreichen einer Betriebsdauer nach der Inbetriebnahme der Maschine, beispielsweise auch nach einer Maschinenwartung aufgezeichnet wurde. Wie zuvor bereits ausgeführt, kann auch ein Vergleich mit mehreren zu unterschiedlichen Zeitpunkten aufgezeichneten Referenzmesssignalen erfolgen. Die Referenzmesssignale können dabei in einer Speichereinheit abgelegt sein, auf die ein Analysemodul zugreifen kann. Alternativ kann die Speichereinheit auch in das Analysemodul integriert sein.

In einem weiteren Ausführungsbeispiel werden Amplitudenwerte von spektralen Anteilen des Messsignals mit diesen spektralen Anteilen zugeordneten Schwellwerten verglichen und bei Überschreiten zumindest eines Schwellwerts durch den diesem Schwellwert zugeordneten Amplitudenwert wird das Fehlererkennungssignal erzeugt. Beispielsweise kann eine Schwelle festgelegt sein, wobei erst bei Überschreiten dieser Schwelle ein Fehlererkennungssignal erzeugt wird. Diese Schwelle kann zeit- bzw. frequenzabhängig sein, d.h. für verschiedene Zeitpunkte/Frequenzen unterschiedliche Schwellwerte definieren. Die Schwelle kann insbesondere als Schwelle relativ zum Referenzfrequenzspektrum definiert sein, so dass erst bei Ansteigen eines spektralen Anteils um einen gewissen Prozentsatz ein Fehlererkennungssignal erzeugt wird. Damit kann einem Referenzfrequenzspektrum, das mehrere Spitzen bzw. Peaks im Spektrum aufweist, eine Schwellwertkurve zugeordnet sein, die frequenzabhängig ist und derart an das Referenzfrequenzspektrum angepasst ist, dass die Schwellwertkurve zu den Amplitudenwerten des Referenzfrequenzspektrums einen definierten absoluten oder relativen Abstand einhält. Der Abstand legt damit die Toleranzschwelle fest, nach deren Überschreitung erst das Fehlererkennungssignal erzeugt wird. Die Schwelle oder Schwellwertkurve kann aus einer Vielzahl von diskreten Schwellwerten oder einer die Schwellwertkurve definierenden Schwellwertfunktion (z.B. einem Polynom) gebildet werden.

Bevorzugt ist jeder Antriebseinheit oder einer Gruppe von Antriebseinheiten eine Steuereinheit zugeordnet und das auszuwertende Messsignal wird durch die Steuereinheit bereitgestellt. Durch diese Steuereinheit wird beispielsweise der Zeitverlauf des Messsignals und/oder das Frequenzspektrum dieses Messsignals bereitgestellt. Die Steuereinheit kann hierbei beispielsweise eine Antriebssteuereinheit sein, die die Regelelektronik der Antriebseinheit enthält und mittels der die Regelung der elektrischen Antriebseinheit, beispielsweise die Drehzahlregelung erfolgt.

Vorzugsweise wird der Rotor der Antriebseinheit von einer ersten Drehgeschwindigkeit auf eine zweite Drehgeschwindigkeit beschleunigt und das Messsignal im gesamten durchlaufenen Drehgeschwindigkeitsbereich analysiert, um einen Teilgeschwindigkeitsbereich zu definieren, in dem auf Fehler hinweisende Auffälligkeiten auftreten. Dies kann insbesondere ein Fehlererkennungszyklus mit grober Auflösung sein. Anschließend werden ein oder mehrere Messsignale, die diesem Teilgeschwindigkeitsbereich zugeordnet sind, im Frequenzbereich spektral analysiert, insbesondere mit einer höheren Auflösung spektral analysiert. Dadurch wird eine zeitoptimierte Fehlererkennung möglich, ohne die Genauigkeit der Fehlererkennung zu verschlechtern.

Vorzugsweise wird die Antriebseinheit derart angesteuert, dass sich eine Änderung der Drehgeschwindigkeit des Rotors, insbesondere eine impulsartige Änderung der Drehgeschwindigkeit ergibt, wobei das aus dieser impulsartigen Änderung der Drehgeschwindigkeit des Rotors resultierende Messsignal analysiert wird. Durch die impulsartige Änderung der Drehgeschwindigkeit des Rotors können mechanische Lose, d.h. ein Spiel zwischen Antriebseinheit und einem bewegten Maschinenteil bzw. abnormes Zahnflankenspiel von Zahnrädern erkannt werden, die bei kontinuierlicher Drehbewegung nicht erkennbar wären.

In einem weiteren Ausführungsbeispiel wird die Belastung der Antriebseinheit durch Ansteuern eines eine Belastungsänderung hervorrufenden Maschinenteils geändert und das bei dieser Belastungsänderung der Antriebseinheit ermittelte Messsignal analysiert. Dadurch kann künstlich der Belastungszustand der Antriebseinheit geändert und das Messsignal bei unterschiedlichen Belastungszuständen analysiert und ausgewertet werden. Insbesondere können den unterschiedlichen Belastungszuständen auch unterschiedliche Referenzmesssignale zugeordnet sein. Dies ist vorteilhaft, da sich besonders im Anfangsstadium befindliche Schäden gerade bei hohen Belastungen der Maschine erkennbar werden, wohingegen bei schwacher Belastung die auf Fehler hinweisenden Auffälligkeiten im Messsignal nicht auftreten.

Des Weiteren betrifft die Erfindung eine Vorrichtung zur Erkennung von Fehlern in einer Maschine umfassend zumindest eine elektrische Antriebseinheit zum Antrieb einer Baugruppe der Maschine, wobei der Antriebseinheit ein Drehwinkelsensor zugeordnet ist, der zur Abgabe eines Messsignals bei Drehung des Rotors ausgebildet ist. Dabei ist ein Analysemodul vorgesehen, mittels dem das vom Drehwinkelsensor abgegebene oder ein davon abgeleitetes Messsignal analysiert und hinsichtlich auf Fehler hinweisenden Auffälligkeiten ausgewertet wird.

Bevorzugt ist das Analysemodul zur Auswertung des Messsignals im Zeitbereich oder im Frequenzbereich ausgebildet ist.

In einem bevorzugten Ausführungsbeispiel ist das Analysemodul zum Vergleich des Messsignals mit einem Referenzmesssignal ausgebildet, wobei das Analysemodul zur Ermittlung der Abweichung des Messsignals vom Referenzmesssignal und zur Erzeugung eines Fehlererkennungssignals ausgebildet ist, wenn die Abweichung eine Toleranzschwelle übersteigt.

In einem weiteren bevorzugten Ausführungsbeispiel umfasst die Maschine eine Vielzahl von Antriebseinheiten, denen jeweils ein Drehwinkelsensor zugeordnet ist, wobei ein oder mehrere Analysemodule vorgesehen sind, mittels denen die von den Drehwinkelsensoren abgegebenen Messsignale analysiert werden und mittels denen die Messsignale hinsichtlich auf Fehler hinweisenden Auffälligkeiten ausgewertet werden.

In einem weiteren bevorzugten Ausführungsbeispiel werden durch das zumindest eine Analysemodul die Messsignale jeweils mit einem dem jeweiligen Messsignal zugeordneten Referenzmesssignal verglichen.

In einem weiteren bevorzugten Ausführungsbeispiel ist das Analysemodul zur Ermittlung der Abweichungen der Messsignale von den jeweiligen Referenzmesssignalen und zur Erzeugung eines Fehlererkennungssignals und/oder zur Erzeugung eines die jeweilige Antriebseinheit charakterisierenden Lokalisierungssignals ausgebildet, wenn zumindest eine ermittelte Abweichung eine Toleranzschwelle übersteigt.

In einem weiteren bevorzugten Ausführungsbeispiel ist das Analysemodul zur Ermittlung der zeitlichen Veränderung des Messsignals über zumindest einen Teil der Maschinenbetriebsdauer basierend auf mehreren in der Vergangenheit zu unterschiedlichen Zeitpunkten aufgenommenen Referenzmesssignalen ausgebildet.

In einem weiteren bevorzugten Ausführungsbeispiel ist jeder Antriebseinheit oder einer Gruppe von Antriebseinheiten eine Steuereinheit zugeordnet ist, wobei das auszuwertende Messsignal durch die Steuereinheit bereitgestellt wird.

In einem weiteren bevorzugten Ausführungsbeispiel ist das Analysemodul derart ausgebildet, dass der Rotor der Antriebseinheit von einer ersten Drehgeschwindigkeit auf eine zweite Drehgeschwindigkeit beschleunigt wird, dass das Messsignal im gesamten durchlaufenen Drehgeschwindigkeitsbereich analysiert wird, um einen Teilgeschwindigkeitsbereich zu definieren, in dem auf Fehler hinweisende Auffälligkeiten auftreten und dass anschließend durch das Analysemodul ein oder mehrere Messsignale, die diesem Teilgeschwindigkeitsbereich zugeordnet sind, im Frequenzbereich spektral analysiert werden.

In einem weiteren bevorzugten Ausführungsbeispiel ist das Analysemodul derart ausgebildet, dass die Antriebseinheit derart angesteuert wird, dass sich eine Änderung der Drehgeschwindigkeit, insbesondere eine impulsartige Änderung der Drehgeschwindigkeit ergibt, und dass das aus dieser impulsartigen Änderung der Drehgeschwindigkeit resultierende Messsignal durch das Analysemodul analysiert wird.

In einem weiteren bevorzugten Ausführungsbeispiel ist das Analysemodul derart ausgebildet, dass die Belastung der Antriebseinheit durch Ansteuern eines eine Belastungsänderung hervorrufenden Maschinenteils geändert wird und dass das bei dieser Belastungsänderung der Antriebseinheit ermittelte Messsignal analysiert wird.

Der Ausdruck "im Wesentlichen" bzw. "etwa" bzw. "ca." bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an mehreren Ausführungsbeispielen näher erläutert. Es zeigen:
- Fig. 1: beispielhaft in einer schematischen Blockdarstellung eine Maschine mit einer Vorrichtung zur Erfassung von Fehlern in einem ersten Ausführungsbeispiel;
- Fig. 2: beispielhaft in einer schematischen Blockdarstellung eine Maschine mit einer Vorrichtung zur Erfassung von Fehlern in einem zweiten Ausführungsbeispiel;
- Fig. 3a: beispielhaft der Zeitverlauf eines einer Antriebseinheit zugeordneten, die Winkelposition des Rotors angebenden Referenzmesssignals und die diesem Referenzmesssignal zugeordnete Toleranzschwelle;
- Fig. 3b: beispielhaft der Zeitverlauf des zum Referenzmesssignal gemäß Fig. 3a zugehörigen Messsignals und die diesem Messsignal zugeordnete Toleranzschwelle;
- Fig. 4a: beispielhaft der Zeitverlauf eines einer Antriebseinheit zugeordneten, die Winkelgeschwindigkeit des Rotors angebenden Referenzmesssignals und die diesem Referenzmesssignal zugeordnete Toleranzschwelle;
- Fig. 4b: beispielhaft der Zeitverlauf des zum Referenzmesssignal gemäß Fig. 4a zugehörigen Messsignals und die diesem Messsignal zugeordnete Toleranzschwelle;
- Fig. 5: beispielhaft ein einer Antriebseinheit zugeordnetes Referenzfrequenzspektrum eines aufgenommenen Messsignals;
- Fig. 6: beispielhaft ein Spektrum eines dem in Figur 5 gezeigten Referenzfrequenzspektrum zugeordneten Messsignals mit einer einen Fehler indizierenden spektralen Überhöhung (gekennzeichnet durch Pfeil);
- Fig. 7a: beispielhaft der Zeitverlauf eines einer Antriebseinheit zugeordneten, die Winkelgeschwindigkeit des Rotors angebenden Referenzmesssignals bei einer impulsartigen Änderung der Drehgeschwindigkeit des Rotors;
- Fig. 7b: beispielhaft der Zeitverlauf des zum Referenzmesssignal gemäß Fig. 7a zugehörigen Messsignals bei einer impulsartigen Änderung der Drehgeschwindigkeit des Rotors.

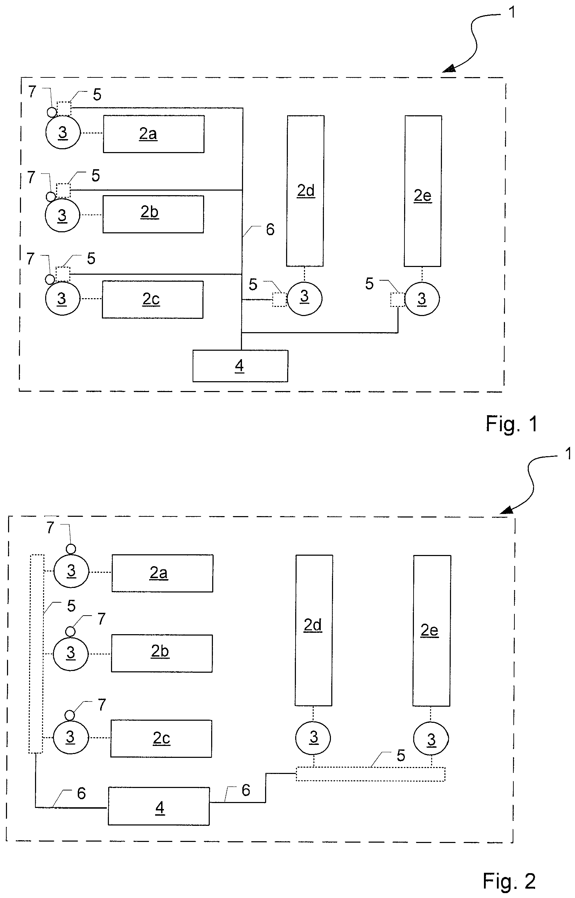

In Figur 1 ist mit dem Bezugszeichen 1 eine Maschine, insbesondere eine Maschine zum Behandeln von Behältern gezeigt. Die Maschine 1 weist mehrere Baugruppen 2a, 2b, 2c, 2d, 2e auf, denen jeweils eine elektrische Antriebseinheit 3 zugeordnet ist. Die elektrische Antriebseinheit 3 kann insbesondere durch einen einen Rotor aufweisenden Elektromotor, bevorzugt durch einen Servomotor gebildet werden. Die Antriebseinheiten 3 sind antriebsmäßig mit jeweils einer Baugruppe 2a - 2e gekoppelt, d.h. die jeweilige Baugruppe 2a - 2e wird durch jeweils eine Antriebseinheit 3 angetrieben. Es versteht sich, dass auch andere Konfigurationen von der Erfindung umfasst sind, beispielsweise dass eine Baugruppe 2a - 2e antriebsmäßig mit mehreren Antriebseinheiten 3 gekoppelt ist oder dass mehrere Baugruppen 2a - 2e durch eine einzige Antriebseinheit 3 angetrieben werden.

Den jeweiligen Antriebseinheiten 3 ist jeweils ein Drehwinkelsensor 7 zugeordnet, mittels dem eine Positionsbestimmung des Rotors oder eine Bestimmung des Drehwinkels, um den sich der Rotor gedreht hat, möglich ist. Im Falle eines Servomotors wird das durch den Drehwinkelsensor 7 abgegebene Messsignal kontinuierlich an eine dem Servomotor zugeordnete Regelelektronik, auch als Servoregler bezeichnet, übermittelt. Anhand dieses Messsignals wird die Drehbewegung des Rotors entsprechend einer oder mehrerer einstellbarer Größen in einem Regelkreis geregelt.

Das Messsignal kann abhängig davon, ob es sich bei dem Drehwinkelsensor um einen Inkrementalgeber oder einen Absolutwertgeber handelt, ein Winkelpositionssignal oder ein Winkeländerungsignal sein. Das Winkelpositionssignal ermöglicht eine direkte Bestimmung des Drehwinkels des Rotors in Bezug auf eine Referenzwinkelposition, wohingegen das Winkeländerungsignal die Bestimmung einer Winkeländerung beispielsweise durch Abzählen von Impulsen des Winkeländerungssignals ermöglicht.

Erfindungsgemäß wird das von dem Drehwinkelsensor 7 abgegebene Messsignal einem Analyseschritt unterzogen und hinsichtlich Auffälligkeiten ausgewertet, die auf einen Fehler an der Antriebseinheit 3 oder an der von der Antriebseinheit 3 angetriebenen Baugruppe hinweisen. Das analysierte Messsignal kann hierbei entweder das direkt vom Drehwinkelsensor 7 abgegebene Messsignal sein oder ein daraus abgeleitetes Messsignal. Die Analyse des Messsignals kann insbesondere im Zeitbereich erfolgen oder das im Zeitbereich ermittelte Messsignal kann durch eine Transformation, insbesondere eine Fouriertransformation in den Frequenzbereich transformiert werden, um im Frequenzbereich hinsichtlich spektraler Auffälligkeiten analysiert zu werden.

Die Maschine 1 umfasst des Weiteren zumindest ein Analysemodul 4 oder die Maschine 1 weist zumindest eine Verbindungsschnittstelle auf, über die die Maschine 1 mit einem Analysemodul 4 koppelbar ist. Mittels des Analysemoduls 4 kann das Messsignal analysiert und hinsichtlich des Vorliegens von Auffälligkeiten, die auf einen Maschinenfehler oder Maschinenverschleiß hindeuten, ausgewertet werden. Diese Auswertung kann beispielsweise durch das Analysemodul 4 selbst, d.h. automatisch erfolgen oder das Analysemodul 4 weist eine graphische Benutzerschnittstelle, beispielsweise ein Display oder einen Monitor auf, mittels dem das Frequenzspektrum darstellbar ist. Damit kann Bedien- oder Wartungspersonal das Messsignal bzw. daraus abgeleitete Signale auswerten und auftretende Maschinenfehler frühzeitig beispielsweise durch auftretende Veränderungen im Messsignal bzw. dem daraus abgeleiteten Signal erkennen.

Bevorzugt ist das Analysemodul 4 zum Vergleich des Messsignals mit einem Referenzmesssignal ausgebildet. Dabei wird durch das Analysemodul 4 die Abweichung des Messsignals vom Referenzmesssignal ermittelt. Für den Fall, dass der Vergleich im Zeitbereich vollzogen wird, kann die Abweichung des Messsignals vom Referenzmesssignal in einem bestimmten Zeitbereich, beispielsweise in einem periodisch wiederkehrenden Zeitbereich ermittelt werden. Falls der Vergleich des Messsignals mit dem Referenzmesssignal im Frequenzbereich erfolgt, kann eine Abweichung zumindest eines spektralen Anteils des Messsignals gegenüber dem korrespondierenden spektralen Anteil des Referenzmesssignals festgestellt werden.

Für den Fall, dass die Abweichung über einer festgelegten Toleranzschwelle liegt, kann durch das Analysemodul ein Fehlererkennungssignal erzeugt werden. Die Toleranzschwelle kann hierbei ein Absolutwert sein, d.h. beispielsweise ein einer bestimmten Frequenz zugeordneter Amplitudenwert. Alternativ kann die Toleranzschwelle als relativer Schwellwert definiert sein, sodass beispielsweise Überschreitungen der Amplitudenwerte des Referenzmesssignals um einen festgelegten Prozentwert zur Erzeugung eines Fehlererkennungssignals führen.

In dem in Figur 1 gezeigten Ausführungsbeispiel ist jeder Antriebseinheit 3 jeweils eine Steuereinheit 5 zugeordnet, über welche die Ansteuerung der jeweiligen Antriebseinheit 3 erfolgt. Die Steuereinheit 5 kann hierbei der Servoregler eines Servomotors sein. Die Steuereinheiten 5 können beispielsweise eine Steuerelektronik enthalten, mittels der die Drehgeschwindigkeit, die Beschleunigung und/oder die Winkelposition des Rotors der Antriebseinheit 3 steuerbar ist.

Die Steuereinheit 5 kann insbesondere das von dem Drehwinkelsensor 7 abgegebene Messsignal empfangen und dieses Messsignal zur Steuerung der Antriebseinheit 3 verwenden. Die Steuereinheit 5 ist vorzugsweise mit dem Analysemodul 4 mittels einer Datenleitung 6 zum Austausch von Daten gekoppelt. Die Steuereinheit 5 kann beispielsweise über diese Datenleitung 6 entweder unmittelbar zeitabhängige Messwerte des jeweiligen Messsignals an das Analysemodul 4 übertragen oder aber von dem Messsignal abgeleitete Messwerte, beispielsweise ein nach einer Transformation in den Frequenzbereich erhaltenes spektrales Messsignal oder ein durch Ableiten (d.h. Bilden des Differentialquotienten) erhaltenes Messsignal. Diese Datenübertragung kann zum einen live bzw. kontinuierlich erfolgen, d.h. die ermittelten Messwerte des Messsignals werden unmittelbar ohne Zwischenspeicherung an das Analysemodul übertragen. Alternativ kann die Steuereinheit 5 auch eine Speichereinheit umfassen, in der die ermittelten Amplitudenmesswerte vor ihrer Übertragung an das Analysemodul 4 zwischengespeichert werden. Damit ist beispielsweise eine Übertragung der ermittelten Messwerte nach Ablauf eines festlegbaren Zeitintervalls oder bei Eintritt definierbarer, die Übertragung auslösender Bedingungen (z.B. bestimmter Maschinenzustand) möglich.

Das Analysemodul 4 ist vorzugsweise zur spektralen Analyse der empfangenen, den jeweiligen Antriebseinheiten 3 zugeordneten Messgrößen ausgebildet. Insbesondere kann durch das Analysemodul 4 durch Transformation der empfangenen zeitabhängigen Messwerte des Messsignals in den Frequenzbereich ein Frequenzspektrum ermittelt werden, das den jeweiligen Antriebseinheiten 3 zugeordnet ist und Informationen hinsichtlich des Schwingungsgehalts der Messgröße enthält. Alternativ kann bereits in der jeweiligen Steuereinheit 5 der Antriebseinheit 3 eine Transformation des zeitabhängigen Messsignals in den Frequenzbereich erfolgen und damit von der jeweiligen Steuereinheit 5 selbst ein Messsignal im Frequenzbereich bereitgestellt werden.

Beispielsweise kann eine Antriebseinheit 3 der Maschine 1 in periodischen Abständen eine erhöhte punktuelle Belastung erfahren, die zu einer periodischen Schwankung der Winkelgeschwindigkeit der jeweiligen Antriebseinheit 3, d.h. insbesondere einer punktuell geringeren Winkelgeschwindigkeit, führt. Dies kann beispielsweise von einem Lager- oder Getriebeschaden oder von einer stellungsabhängigen Kollision eines von der Antriebseinheit 3 bewegten Maschinenelements herrühren. Diese zeitlich periodischen Belastungsschwankungen führen zu zeitlich periodischen Winkelgeschwindigkeitsschwankungen des Rotors der jeweiligen Antriebseinheit 3 und damit zu zeitlich periodischen Schwankungen bzw. Unregelmäßigkeiten des vom Drehwinkelsensor 7 abgegebenen Messsignals. Die Transformation des zeitabhängigen Messsignals in den Frequenzbereich führt damit zu einer Spitze bzw. einem Peak im Frequenzspektrum dieses Messsignals, d.h. zu einer spektralen Überhöhung an einer definierten Frequenz, die der zeitlichen Periodizität entspricht, mit der die Belastungsschwankungen auftreten (f = 1/T, wobei T die zeitliche Periode der Belastungsschwankung ([s]) und f die Frequenz [Hz] ist). Die Transformation des Messsignals in den Frequenzbereich kann durch jegliche aus dem Stand der Technik bekannte Transformationsverfahren, insbesondere durch eine Fourier-Transformation oder eine Laplace-Transformation, erfolgen. Für den Fall, dass durch die Steuereinheiten 5 zeitlich diskrete Amplitudenwerte der Messgröße bereitgestellt werden, kann insbesondere ein diskretes Transformationsverfahren, beispielsweise eine diskrete Fourier-Transformation (DFT) vollzogen werden.

Das Analysemodul 4 kann insbesondere für jede Antriebseinheit 3 getrennt das Messsignal empfangen und damit getrennt für jede Antriebseinheit 3 ein Frequenzspektrum des jeweiligen Messsignals bestimmen. Für den Fall, dass eines der ermittelten Frequenzspektren einen spektralen Anteil aufweist, der oberhalb eines definierten Schwellwertes liegt, erzeugt das Analysemodul 4 vorzugsweise ein Fehlererkennungssignal. Optional kann auch ein Lokalisierungssignal erzeugt werden, das angibt, welche Antriebseinheit 3 die Erzeugung des Fehlererkennungssignals verursacht hat. Dadurch wird es möglich, dass ein auftretender Fehler schneller lokalisierbar ist.

In einem Ausführungsbeispiel ist es möglich, dass das Messsignal kontinuierlich oder quasi-kontinuierlich (beispielsweise durch Verzögerungen durch Datenübertragung) analysiert und mit dem Referenzmesssignal verglichen wird. Insbesondere ist es möglich, dass fußend auf dem zeitlichen Verlauf der Messgröße das Frequenzspektrum kontinuierlich oder quasi-kontinuierlich (beispielsweise durch Verzögerungen durch Datenübertragung und Berechnung des Frequenzspektrums) bestimmt wird und ein kontinuierlicher bzw. quasi-kontinuierlicher Vergleich mit einem Referenzfrequenzspektrum erfolgt. Alternativ ist es möglich, dass das Messsignal in regelmäßigen Zeitabständen mit dem Referenzmesssignal verglichen wird bzw. das Frequenzspektrum des Messsignals in regelmäßigen Zeitabständen ermittelt wird, und der Vergleich mit dem Referenzfrequenzspektrum ebenfalls in regelmäßigen Zeitabständen erfolgt.

Das Referenzmesssignal bzw. das Referenzfrequenzspektrum kann insbesondere ein im Neuzustand der Maschine aufgenommenes Signal bzw. Frequenzspektrum sein, das in einer dafür vorgesehenen Speichereinheit abgelegt ist. Die Speichereinheit kann insbesondere im Analysemodul 4 angeordnet sein oder eine externe Speichereinheit sein, mit der das Analysemodul 4 gekoppelt ist und auf die das Analysemodul 4 zur Durchführung des spektralen Vergleichs zugreifen kann.

Alternativ oder zusätzlich können in dieser Speichereinheit mehrere in der Vergangenheit zu unterschiedlichen Zeitpunkten aufgenommene Referenzmesssignale abgelegt sein. Beispielsweise kann ein Referenzmesssignal das im Neuzustand der Maschine aufgenommenes Messsignal einer Antriebseinheit 3 und die weiteren Referenzmesssignale die in bestimmten Zeitintervallen oder nach einer bestimmten Betriebsdauer jeweils aufgenommenen Messsignale dieser Antriebseinheit 3 sein. Dadurch lässt sich der zeitliche Verlauf der Änderung des Messsignals über die Zeit ermitteln, so dass schleichend auftretende Fehler leichter erkannt werden können.

Figur 2 zeigt ein alternatives Ausführungsbeispiel der Maschine 1, die ebenfalls eine Vielzahl von Antriebseinheiten 3 aufweist, die antriebsmäßig mit den Baugruppen 2a - 2e gekoppelt sind. Unterschiedlich zu dem in Figur 1 gezeigten Ausführungsbeispiel ist einer Gruppe von Antriebseinheiten 3 jeweils eine Steuereinheit 5 zugeordnet, d.h. eine Steuereinheit 5 steuert mehrere Antriebseinheiten 3. Die Steuereinheiten 5 können für jede Antriebseinheit 3 der Gruppe von Antriebseinheiten 3 getrennt jeweils das vom Drehwinkelsensor 7 der jeweiligen Antriebseinheit 3 abgegebene Messsignal erfassen. Wie bereits zuvor in Bezug auf die Figur 1 beschrieben, werden die Messsignale bzw. davon abgeleitete Messsignale an das Analysemodul 4 übertragen. Die Funktionalität der Steuereinheiten 5 und des Analysemoduls 4 entspricht im Übrigen den zuvor in Bezug auf Figur 1 beschriebenen Funktionalitäten.

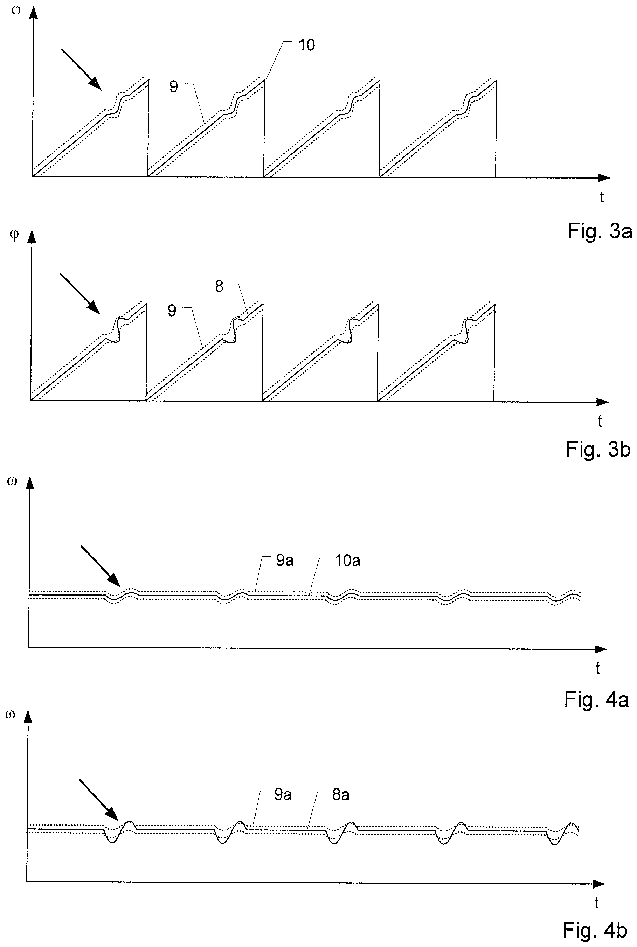

Figur 3a zeigt beispielhaft das von einem Drehwinkelsensor abgegebene Messsignal im Zeitbereich. Dieses Messsignal 8 wurde beispielsweise im Neuzustand der Maschine bzw. nach einer Maschinenwartung aufgenommen und bildet damit ein Referenzmesssignal 10. Die zeitabhängigen Messwerte des Referenzmesssignals 10 geben absolute Winkelpositionen ϕ des Rotors der Antriebseinheit beispielsweise in Bezug auf eine Referenzwinkelposition an. Für den Fall, dass der Rotor der Antriebseinheit mit einer festen Winkelgeschwindigkeit betrieben wird, ergibt sich ein im Wesentlichen sägezahnförmiges Referenzmesssignal 10. Wie in Figur 3 mit dem Pfeil angedeutet, weist bereits das Referenzmesssignal 10 periodisch auftretende Abweichungen von der reinen Sägezahnform auf. Eine derartige Abweichung ist beispielsweise auf eine Belastungsschwankung zurückzuführen. Ferner ist in Fig. 3a mit den gestrichelten Linien eine Toleranzschwelle 9 angedeutet. Die Toleranzschwelle 9 kann hierbei an das Referenzmesssignal 10 angepasst sein, so dass bereits im Referenzmesssignal 10 auftretende Belastungsschwankungen in der Toleranzschwelle 9 berücksichtigt werden können.

Fig. 3b zeigt ein Messsignal 8, dem das in Figur 3a gezeigte Referenzmesssignal 10 bzw. die Toleranzschwelle 9 zugeordnet sind. Wie beim Vergleich der Figuren 3a und 3b erkennbar ist, hat sich der durch die Belastungsschwankung hervorgerufene Ausschlag des Messsignals 8 vergrößert und übersteigt die Toleranzschwelle 9. Aufgrund des Übersteigens der Toleranzschwelle 9 wird beispielsweise ein Fehlererkennungssignal an der Analyseeinheit ausgegeben.

Fig. 4a zeigt ein Referenzmesssignal 10a, das der Winkelgeschwindigkeit ω des Rotors der Antriebseinheit entspricht und beispielsweise ebenfalls im Neuzustand der Maschine bzw. nach einer Maschinenwartung aufgenommen wurde. Es kann beispielsweise durch einmaliges Ableiten des in Figur 3a gezeigten Winkelpositionssignals ϕ erhalten werden. Für den Fall, dass der Rotor mit konstanter Winkelgeschwindigkeit ω umläuft, ist dies im Wesentlichen ein Gleichsignal. Im Falle von Belastungsschwankungen der Antriebseinheit kann das Messsignal 8a periodisch auftretende Abweichungen vom Gleichsignal aufweisen. Ferner ist in Fig. 4a mit den gestrichelten Linien eine Toleranzschwelle 9a angedeutet. Die Toleranzschwelle 9a kann hierbei an das Referenzmesssignal 10a angepasst sein, so dass bereits im Referenzmesssignal 10a auftretende Belastungsschwankungen in der Toleranzschwelle 9a berücksichtigt werden können.

Fig. 4b zeigt ein Messsignal 8a, dem das in Figur 4a gezeigte Referenzmesssignal 10a bzw. die Toleranzschwelle 9a zugeordnet sind. Wie beim Vergleich der Figuren 4a und 4b erkennbar ist, hat sich der durch die Belastungsschwankung hervorgerufene Ausschlag des Messsignals 8a vergrößert und übersteigt die Toleranzschwelle 9a. Aufgrund des Übersteigens der Toleranzschwelle 9 wird beispielsweise ein Fehlererkennungssignal an der Analyseeinheit ausgegeben.

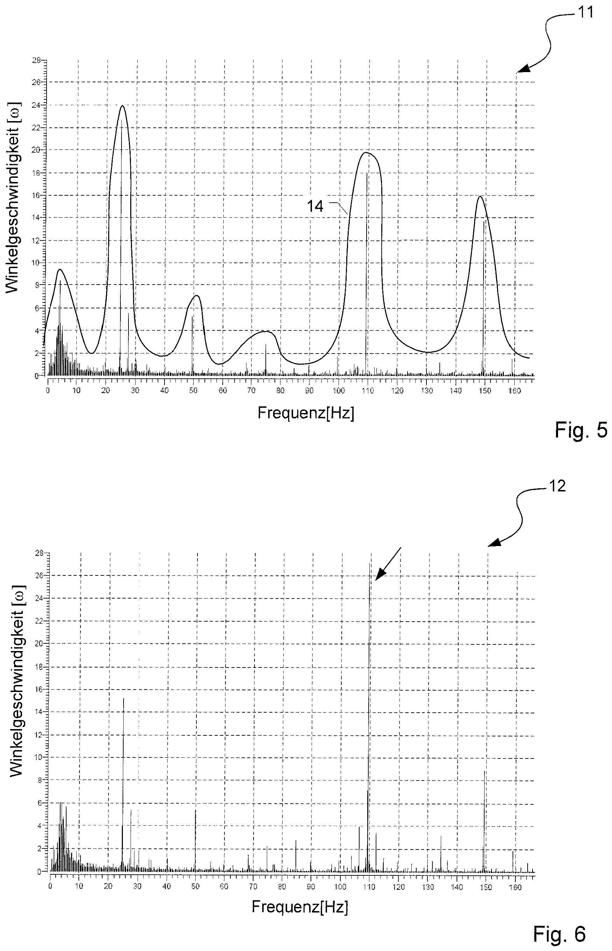

Figuren 5 und 6 zeigen beispielhaft Frequenzspektren 11, 12, die durch Transformation des Winkelgeschwindigkeitssignals ω in den Frequenzbereich erhalten wurden, wobei die Abszisse die jeweiligen Frequenzen [Hz] und die Ordinate die Winkelgeschwindigkeit des Rotors angibt. Das in Figur 5 gezeigte Spektrum ist insbesondere ein Referenzfrequenzspektrum 11, das beispielsweise im Neuzustand einer Maschine 1 aufgenommen wurde und beispielsweise dem Frequenzspektrum des Winkelgeschwindigkeitssignals ω entspricht. Das Referenzfrequenzspektrum 11 zeigt bereits mehrere Spitzen oder Peaks an unterschiedlichen Frequenzen.

Figur 6 zeigt ein Frequenzspektrum 12, das beispielsweise jeweils den spektralen Verlauf des Winkelgeschwindigkeitssignals ω nach einer längeren Betriebsdauer einer Maschine 1 wiederspiegelt. Wie ein Vergleich des Frequenzspektrums zwischen Figur 5 und Figur 6 erkennen lässt, weist das in Figur 6 gezeigte Frequenzspektrum 12 eine höhere Welligkeit auf, d.h. es treten mehrere Peaks zu unterschiedlichen Frequenzen auf. Insbesondere auffällig ist der mit dem Pfeil gekennzeichnete Peak, der sich im Vergleich zu dem Referenzfrequenzspektrum 11 gemäß Figur 5 wesentlich erhöht hat. Dem Referenzfrequenzspektrum 11 aus Figur 5 kann eine Schwellwertkurve 14 zugeordnet sein, die Schwellwerte in Abhängigkeit von der Frequenz angibt. Vorzugsweise ist die Schwellwertkurve 14 an das Referenzfrequenzspektrum 11, d.h. den spektralen Verlauf der Amplitude der Messgröße angepasst. Die Schwellwertkurve 14 kann dabei durch eine Vielzahl von frequenzabhängigen, d.h. jeweils einer definierten Frequenz zugeordneten Schwellwerten gebildet werden, wobei die Beträge dieser Schwellwerte jeweils an die Amplitude des spektralen Anteils an dieser definierten Frequenz angepasst sind. Beispielsweise kann der Schwellwert durch einen Prozentwert festgelegt werden, der angibt, um wie viel Prozent der Schwellwert des spektralen Anteils oberhalb der Amplitude dieses spektralen Anteils liegt. Für den Fall, dass ein spektraler Anteil des Spektrums diese spektrale Schwellwertkurve 14 übersteigt, wird ein Fehlererkennungssignal erzeugt.

Durch die Zuordnung des Referenzfrequenzspektrums 11 und des Frequenzspektrums 12 zu einer definierten Antriebseinheit 3 oder zu einer Gruppe von Antriebseinheiten 3 kann eine Lokalisierung bzw. eine grobe Lokalisierung des Fehlers vorgenommen werden, da ein plötzlich auftretender oder in der Amplitude ansteigender Peak im Frequenzspektrum 12 auf eine erhöhte Belastungsschwankung der diesem Frequenzspektrum 12 zugeordneten Antriebseinheit 3 hinweist, und damit auf einen Defekt in der mit dieser Antriebseinheit 3 gekoppelten Baugruppe 2a - 2e zurückzuführen ist.

Eine weitere Fehlerlokalisierung kann aufgrund der Frequenz vorgenommen werden, an der der Peak im Frequenzspektrum 12 auftritt. Die Frequenz lässt nämlich Rückschlüsse auf Bauteile innerhalb der Baugruppe 2a - 2e zu, die beispielsweise mit einer Frequenz bewegt werden, die der Frequenz entspricht, an der der spektrale Peak auftritt.

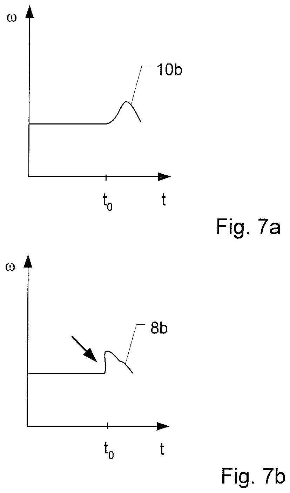

Fig. 7a zeigt ein weiteres Referenzmesssignal 10b in einer Ausschnittsdarstellung, das der Winkelgeschwindigkeit ω des Rotors der Antriebseinheit entspricht und beispielsweise ebenfalls im Neuzustand der Maschine bzw. nach einer Maschinenwartung aufgenommen wurde. Die Besonderheit dieses Referenzmesssignals 10b besteht darin, dass es während einer Änderung der Drehgeschwindigkeit des Rotors, insbesondere einer impulsartigen Änderung der Drehgeschwindigkeit des Rotors zum Zeitpunkt t₀ aufgenommen wurde. Bei derartigen impulsartigen Änderungen der Drehgeschwindigkeit des Rotors kann beispielsweise das Zahnflankenspiel von ineinandergreifenden Zahnrädern untersucht werden.

Fig. 7b zeigt ein Messsignal 8b, dem das in Figur 7a gezeigte Referenzmesssignal 10b zugeordnet ist. Wie beim Vergleich der Figuren 7a und 7b erkennbar ist, hat sich die Steigung des auf die impulsartige Änderung der Drehgeschwindigkeit des Rotors zum Zeitpunkt t₀ zurückzuführenden Peaks unmittelbar nach dem Zeitpunkt t₀ (mit Pfeil gekennzeichnet) erheblich vergrößert so dass dies beispielsweise auf ein bereits vorhandenes großes Zahnflankenspiel hindeutet. Beispielsweise kann auch dem Referenzmesssignal 10b eine Toleranzschwelle zugeordnet sein, bei deren Überschreiten ein Fehlererkennungssignal an der Analyseeinheit ausgegeben wird.

Die Erfindung wurde voranstehend an mehreren Ausführungsbeispielen beschrieben. Es versteht sich, dass zahlreiche Änderungen sowie Abwandlungen möglich sind, ohne dass dadurch der der Erfindung zugrundeliegende Erfindungsgedanke verlassen wird.

### Bezugszeichenliste

- 1: Maschine
- 2a - 2e: Baugruppe
- 3: Antriebseinheit
- 4: Analysemodul
- 5: Steuereinheit
- 6: Datenleitung
- 7: Drehwinkelsensor
- 8, 8a, 8b: Messsignal
- 9, 9a: Toleranzschwelle
- 10, 10a, 10b: Referenzmesssignal
- 11: Referenzfrequenzspektrum
- 12: Frequenzspektrum
- 14: Schwellwertkurve

## Patentansprüche

1. Verfahren zur Erkennung von Fehlern in einer Maschine (1) umfassend zumindest eine elektrische, einen Rotor aufweisende Antriebseinheit (3) zum Antrieb einer Baugruppe (2a - 2e) der Maschine (1), wobei der Antriebseinheit (3) ein Drehwinkelsensor (7) zugeordnet ist, der zur Abgabe eines Messsignals (8, 8a, 8b) bei Drehung des Rotors ausgebildet ist, wobei das vom Drehwinkelsensor (7) abgegebene oder ein davon abgeleitetes Messsignal (8, 8a, 8b) analysiert und hinsichtlich auf Fehler hinweisenden Auffälligkeiten ausgewertet wird, wobei das Messsignal (8, 8a, 8b) im Zeitbereich oder im Frequenzbereich mit einem Referenzmesssignal (10, 10a, 10b) verglichen wird und dass bei Abweichen des Messsignals (8, 8a, 8b) vom Referenzmesssignal (10, 10a, 10b) um eine Toleranzschwelle (9, 9a) ein Fehlererkennungssignal erzeugt wird, **dadurch gekennzeichnet, dass** die Antriebseinheit ein Servomotor mit einem Servoregler ist, dass der Drehwinkelsensor (7) der inhärent im Servomotor vorgesehene Drehwinkelsensor ist, dessen Signale im Servoregler zur gesteuerten Drehung des Rotors herangezogen werden und dass das Referenzmesssignal (10, 10a, 10b) ein im Neuzustand der Maschine (1) aufgenommenes Referenzmesssignal ist.

2. Verfahren nach Anspruch 1, **dadurch gekennzeichnet, dass** das Messsignal (8a, 8b) durch Ableiten des vom Drehwinkelsensor (7) abgegebenen Signals erhalten wird.

3. Verfahren nach Anspruch 1 oder 2, **dadurch gekennzeichnet, dass** das Messsignal (8, 8a, 8b) im Zeitbereich und/oder im Frequenzbereich analysiert wird.

4. Verfahren nach Anspruch 1, **dadurch gekennzeichnet, dass** die Maschine (1) eine Vielzahl von Antriebseinheiten (3) umfasst, dass die von den Drehwinkelsensoren (7) dieser Antriebseinheiten (3) abgegebenen oder davon abgeleiteten Messsignale (8, 8a, 8b) analysiert und hinsichtlich auf Fehler hinweisenden Auffälligkeiten ausgewertet werden.

5. Verfahren nach Anspruch 4, **dadurch gekennzeichnet, dass** die Messsignale (8, 8a, 8b) jeweils mit einem ihnen zugeordneten Referenzmesssignal (10, 10a, 10b) verglichen werden und dass bei Abweichen zumindest eines Messsignals (8, 8a, 8b) von dem ihm zugeordneten Referenzmesssignal (10, 10a, 10b) um eine Toleranzschwelle (9, 9a) ein Fehlererkennungssignal und/oder ein die jeweilige Antriebseinheit (3) charakterisierendes Lokalisierungssignal erzeugt wird.

6. Verfahren nach einem der vorhergehenden Ansprüche, **dadurch gekennzeichnet, dass** das Messsignal (8, 8a, 8b) kontinuierlich oder in regelmäßigen Zeitabständen analysiert wird.

7. Verfahren nach einem der vorhergehenden Ansprüche, **dadurch gekennzeichnet, dass** Amplitudenwerte von spektralen Anteilen des Messsignals (8, 8a, 8b) mit diesen spektralen Anteilen zugeordneten Schwellwerten verglichen werden und dass bei Überschreiten zumindest eines Schwellwerts durch den diesem Schwellwert zugeordneten Amplitudenwert das Fehlererkennungssignal erzeugt wird.

8. Verfahren nach einem der vorhergehenden Ansprüche, **dadurch gekennzeichnet, dass** die zeitliche Veränderung des Messsignals (8, 8a, 8b) über zumindest einen Teil der Maschinenbetriebsdauer basierend auf mehreren in der Vergangenheit zu unterschiedlichen Zeitpunkten aufgenommenen Referenzmesssignalen (10, 10a, 10b) ermittelt wird.

9. Verfahren nach einem der vorhergehenden Ansprüche, **dadurch gekennzeichnet, dass** jeder Antriebseinheit (3) oder einer Gruppe von Antriebseinheiten (3) eine Steuereinheit (5) zugeordnet ist und dass das auszuwertende Messsignal (8, 8a, 8b) durch die Steuereinheit (5) bereitgestellt wird.

10. Verfahren nach einem der vorhergehenden Ansprüche, **dadurch gekennzeichnet, dass** der Rotor der Antriebseinheit (3) von einer ersten Drehgeschwindigkeit auf eine zweite Drehgeschwindigkeit beschleunigt wird, dass das Messsignal im gesamten durchlaufenen Drehgeschwindigkeitsbereich analysiert wird, um einen Teilgeschwindigkeitsbereich zu definieren, in dem auf Fehler hinweisende Auffälligkeiten auftreten und dass anschließend ein oder mehrere Messsignale, die diesem Teilgeschwindigkeitsbereich zugeordnet sind, im Frequenzbereich spektral analysiert werden.

11. Verfahren nach einem der vorhergehenden Ansprüche, **dadurch gekennzeichnet, dass** die Antriebseinheit (3) derart angesteuert wird, dass sich eine Änderung der Drehgeschwindigkeit des Rotors, insbesondere eine impulsartige Änderung der Drehgeschwindigkeit ergibt, und dass das aus dieser impulsartigen Änderung der Drehgeschwindigkeit des Rotors resultierende Messsignal (8, 8a, 8b) analysiert wird.

12. Verfahren nach einem der vorhergehenden Ansprüche, **dadurch gekennzeichnet, dass** die Belastung der Antriebseinheit (3) durch Ansteuern eines eine Belastungsänderung hervorrufenden Maschinenteils geändert wird und dass das bei dieser Belastungsänderung der Antriebseinheit (3) ermittelte Messsignal (8, 8a, 8b) analysiert wird.

13. Vorrichtung zur Erkennung von Fehlern in einer Maschine (1) umfassend zumindest eine elektrische Antriebseinheit (3) zum Antrieb einer Baugruppe (2a-2e) der Maschine (1), wobei der Antriebseinheit (3) ein Drehwinkelsensor (7) zugeordnet ist, der zur Abgabe eines Messsignals (8, 8a, 8b) bei Drehung des Rotors ausgebildet ist, wobei ein Analysemodul (4) vorgesehen ist, mittels dem das vom Drehwinkelsensor (7) abgegebene oder ein davon abgeleitetes Messsignal (8, 8a, 8b) analysiert und hinsichtlich auf Fehler hinweisenden Auffälligkeiten ausgewertet wird, **dadurch gekennzeichnet, dass** die Antriebseinheit ein Servomotor mit einem Servoregler ist, dass der Drehwinkelsensor (7) der inhärent im Servomotor vorgesehene Drehwinkelsensor ist, dessen Signale im Servoregler zur gesteuerten Drehung des Rotors herangezogen werden und dass das Analysemodul (4) zur Ermittlung der zeitlichen Veränderung des Messsignals (8, 8a, 8b) über zumindest einen Teil der Maschinenbetriebsdauer basierend auf mehreren in der Vergangenheit zu unterschiedlichen Zeitpunkten aufgenommenen Referenzmesssignalen (10, 10a, 10b) ausgebildet ist.

14. Vorrichtung nach Anspruch 13, **dadurch gekennzeichnet, dass** das Analysemodul (4) zur Auswertung des Messsignals (8, 8a, 8b) im Zeitbereich oder im Frequenzbereich ausgebildet ist.

15. Vorrichtung nach Anspruch 13 oder 14, **dadurch gekennzeichnet, dass** das Messsignal (8, 8a, 8b) mit einem Referenzmesssignal (10, 10a, 10b) verglichen wird, wobei das Analysemodul (4) zur Ermittlung der Abweichung des Messsignals vom Referenzmesssignal (10) und zur Erzeugung eines Fehlererkennungssignals ausgebildet ist, wenn die Abweichung eine Toleranzschwelle (9, 9a) übersteigt.

16. Vorrichtung nach Anspruch 13, **dadurch gekennzeichnet, dass** die Maschine (1) eine Vielzahl von Antriebseinheiten (3) umfasst, denen jeweils ein Drehwinkelsensor (7) zugeordnet ist, dass ein oder mehrere Analysemodule (4) vorgesehen sind, mittels denen die von den Drehwinkelsensoren (7) abgegebenen Messsignale (8, 8a, 8b) analysiert werden und mittels denen die Messsignale (8, 8a, 8b) hinsichtlich auf Fehler hinweisenden Auffälligkeiten ausgewertet werden.

17. Vorrichtung nach Anspruch 16, **dadurch gekennzeichnet, dass** durch das zumindest eine Analysemodul (4) die Messsignale (8, 8a, 8b) jeweils mit einem dem jeweiligen Messsignal (8, 8a, 8b) zugeordneten Referenzmesssignal (10, 10a, 10b) verglichen werden.

18. Vorrichtung nach Anspruch 17, **dadurch gekennzeichnet, dass** das Analysemodul (4) zur Ermittlung der Abweichungen der Messsignale (8, 8a, 8b) von den jeweiligen Referenzmesssignalen (10, 10a, 10b) und zur Erzeugung eines Fehlererkennungssignals und/oder zur Erzeugung eines die jeweilige Antriebseinheit (3) charakterisierenden Lokalisierungssignals ausgebildet ist, wenn zumindest eine ermittelte Abweichung eine Toleranzschwelle (9, 9a) übersteigt.

19. Vorrichtung nach einem der Ansprüche 13 bis 18, **dadurch gekennzeichnet, dass** jeder Antriebseinheit (3) oder einer Gruppe von Antriebseinheiten (3) eine Steuereinheit (5) zugeordnet ist und dass das auszuwertende Messsignal (8, 8a, 8b) durch die Steuereinheit (5) bereitgestellt wird.

20. Vorrichtung nach einem der Ansprüche 13 bis 19, **dadurch gekennzeichnet, dass** das Analysemodul (4) derart ausgebildet ist, dass der Rotor der Antriebseinheit (3) von einer ersten Drehgeschwindigkeit auf eine zweite Drehgeschwindigkeit beschleunigt wird, dass das Messsignal (8, 8a, 8b) im gesamten durchlaufenen Drehgeschwindigkeitsbereich analysiert wird, um einen Teilgeschwindigkeitsbereich zu definieren, in dem auf Fehler hinweisende Auffälligkeiten auftreten und dass anschließend durch das Analysemodul (4) ein oder mehrere Messsignale (8, 8a, 8b), die diesem Teilgeschwindigkeitsbereich zugeordnet sind, im Frequenzbereich spektral analysiert werden.

21. Vorrichtung nach einem der Ansprüche 13 bis 20, **dadurch gekennzeichnet, dass** das Analysemodul (4) derart ausgebildet ist, dass die Antriebseinheit (3) derart angesteuert wird, dass sich eine Änderung der Drehgeschwindigkeit, insbesondere eine impulsartige Änderung der Drehgeschwindigkeit ergibt, und dass das aus dieser impulsartigen Änderung der Drehgeschwindigkeit resultierende Messsignal (8, 8a, 8b) durch das Analysemodul (4) analysiert wird.

22. Vorrichtung nach einem der Ansprüche 13 bis 21, **dadurch gekennzeichnet, dass** das Analysemodul (4) derart ausgebildet ist, dass die Belastung der Antriebseinheit (3) durch Ansteuern eines eine Belastungsänderung hervorrufenden Maschinenteils geändert wird und dass das bei dieser Belastungsänderung der Antriebseinheit (3) ermittelte Messsignal (8, 8a, 8b) analysiert wird.

## Claims

1. Method for detecting errors in a machine (1), comprising at least one electric drive unit (3) comprising a rotor, for driving an assembly (2a - 2e) of the machine (1), wherein a rotation angle sensor (7) is assigned to the drive unit (3), which is designed to emit a measurement signal (8, 8a, 8b) as the rotor rotates, wherein the measurement signal (8, 8a, 8b) emitted by the rotation angle sensor (7) or a measurement signal derived therefrom is analysed and evaluated in respect of abnormalities indicating errors, wherein the measurement signal (8, 8a, 8b) is compared in the time range or in the frequency range with a reference measurement signal (10, 10a, 10b), and wherein, in the event of the measurement signal (8, 8a, 8b) deviating from the reference measurement signal (10, 10a, 10b) by a tolerance threshold (9, 9a), an error detection signal is generated, **characterised in that** the drive unit is a servomotor with a servo regulator, that the rotation angle sensor (7) is a rotation angle sensor provided inherently in the servomotor, of which the signals are drawn on in the servo regulator for the controlled rotation of the rotor, and that the reference measurement signal (10, 10a, 10b) is a reference measurement signal recorded when the machine (1) is in a new state.

2. Method according to claim 1, **characterised in that** the measurement signal (8a, 8b) is obtained by derivation from the signal emitted by the rotation angle sensor (7).

3. Method according to claim 1 or 2, **characterised in that** the measurement signal (8, 8a, 8b) is analysed in the time range and/or in the frequency range.

4. Method according to claim 1, **characterised in that** the machine (1) comprises a plurality of drive units (3), that the measurement signals (8, 8a, 8b) emitted by the rotation angle sensors (7) of these drive units (3) or derived therefrom are analysed and evaluated in respect of abnormalities indicating errors.

5. Method according to claim 4, **characterised in that** the measurement signals (8, 8a, 8b) are in each case compared with a reference measurement signal (10, 10a, 10b) assigned to them, and that, in the event of a deviation of at least one measurement signal (8, 8a, 8b) from the reference measurement signal (10, 10a, 10b) assigned to it by a tolerance threshold (9, 9a), an error recognition signal and/or a localising signal is generated, characterising the respective drive unit (3).

6. Method according to any one of the preceding claims, **characterised in that** the measurement signal (8, 8a, 8b) is analysed continuously or at regular time intervals.

7. Method according to any one of the preceding claims, **characterised in that** amplitude values of spectral portions of the measurement signal (8, 8a, 8b) are compared with threshold values assigned to these spectral portions, and that, in the event of at least one threshold value being exceeded by the amplitude value assigned to this threshold value, the error detection signal is generated.

8. Method according to any one of the preceding claims, **characterised in that** the time change in the measurement signal (8, 8a, 8b) is determined over at least a part of the machine operating duration, based on a plurality of reference measurement signals (10, 10a, 10b) recorded at different times in the past.

9. Method according to any one of the preceding claims, **characterised in that** a control unit (5) is assigned to each drive unit (3) or a group of drive units (3), and that the measurement signal (8, 8a, 8b) to be evaluated is provided by the control unit (5).

10. Method according to any one of the preceding claims, **characterised in that** the rotor of the drive unit (3) is accelerated from a first rotation speed to a second rotation speed, that the measurement signal is analysed in the entire rotation speed range which is run through, in order to define a part speed range in which abnormalities indicating errors are occurring, and that, following this, one or more measurement signals which are assigned to this part speed range are spectrally analysed in the frequency range.

11. Method according to any one of the preceding claims, **characterised in that** the drive unit (3) is actuated in such a way that a change in rotation speed of the rotor is incurred, in particular a pulse-type change in the rotation speed of the rotor, and that the measurement signal (8, 8a, 8b) resulting from this pulse-type change in the rotation speed of the rotor is analysed.

12. Method according to any one of the preceding claims, **characterised in that** the loading of the drive unit (3) is changed by the actuation of a machine part which incurs a load change, and that the measurement signal (8, 8a, 8b) detected at this load change of the drive unit (3) is analysed.

13. Device for detecting errors in a machine (1), comprising at least one electric drive unit (3) comprising a rotor, for driving an assembly (2a - 2e) of the machine (1), wherein a rotation angle sensor (7) is assigned to the drive unit (3), which is designed to emit a measurement signal (8, 8a, 8b) as the rotor rotates, wherein an analysis module (4) is provided, by means of which the measurement signal (8, 8a, 8b) emitted by the rotation angle sensor (7) or a measurement signal derived therefrom is analysed and evaluated in respect of abnormalities indicating errors, **characterised in that** the drive unit is a servomotor with a servo regulator, that the rotation angle sensor (7) is the rotation angle sensor inherently provided in the servomotor, the signals of which are drawn on in the servo regulator for the controlled rotation of the rotor, and that the analysis module (4) for detecting the time change in the measurement signal (8, 8a, 8b) is configured over at least a part of the machine operating duration, based on a plurality of reference measurement signals (10, 10a, 10b) recorded at different times in the past.

14. Device according to claim 13, **characterised in that** the analysis module (4) is configured for evaluating the measurement signal (8, 8a, 8b) in the time range or in the frequency range.

15. Device according to claim 13 or 14, **characterised in that** the measurement signal (8, 8a, 8b) is compared with a reference measurement signal (10, 10a, 10b), wherein the analysis module (4) is configured so as to detect the deviation of the measurement signal from the reference measurement signal (10) and so as to generate an error identification signal if the deviation exceeds a tolerance threshold (9, 9a).

16. Device according to claim 13, **characterised in that** the machine (1) comprises a plurality of drive units (3), to each of which a rotation angle sensor (7) is assigned, that one or more analysis modules (4) are provided, by means of which the measurement signals (8, 8a, 8b) emitted by the rotation angle sensors (7) are analysed, and by means of which the measurement signals (8, 8a, 8b) are evaluated in respect of abnormalities indicating errors.

17. Device according to claim 16, **characterised in that**, by means of the at least one analysis module (4), the measurement signals (8, 8a, 8b) are in each case compared with a reference measurement signal (10, 10a, 10b) assigned to the respective measurement signal (8, 8a, 8b).

18. Device according to claim 17, **characterised in that** the analysis module (4) is configured such as to detect deviations in the measurement signals (8, 8a, 8b) from the respective reference measurement signals (10, 10a, 10b) and so as to generate an error identification signal and/or to generate a localising signal which characterises the respective drive unit (3) if at least one deviation detected exceeds a tolerance threshold (9, 9a).

19. Device according to any one of claims 13 to 18, **characterised in that** a control unit (5) is assigned to each drive unit (3) or a group of drive units (3), and that the measurement signal (8, 8a, 8b) which is to be evaluated is provided by the control unit (5).

20. Device according to any one of claims 13 to 19, **characterised in that** the analysis module (4) is configured in such a way that the rotor of the drive unit (3) is accelerated from a first rotation speed to a second rotation speed, that the measurement signal (8, 8a, 8b) is analysed in the entire rotation speed range which is run through, in order to define a part speed range in which abnormalities indicating errors occur, and that, following this, one or more measurement signals (8, 8a, 8b) which are assigned to this part speed range are spectrally analysed by the analysis module (4) in the frequency range.

21. Device according to any one of claims 13 to 20, **characterised in that** the analysis module (4) is configured in such a way that the drive unit (3) is actuated in such a way that a change in the rotation speed, in particular a pulse-type change in the rotation speed, is incurred, and that the measurement signal (8, 8a, 8b) resulting from this pulse-type change in the rotation speed is analysed by the analysis module (4).

22. Device according to any one of claims 13 to 21, **characterised in that** the analysis module (4) is configured in such a way that the loading of the drive unit (3) is changed by the actuation of a machine part which incurs a load change, and that the measurement signal (8, 8a, 8b) detected at this load change of the drive unit (3) is analysed.

## Revendications

1. Procédé d'identification d'erreurs dans une machine (1) comprenant au moins une unité d'entraînement (3) électrique présentant un rotor pour entraîner un module (2a - 2e) de la machine (1), dans lequel est associé à l'unité d'entraînement (3) un capteur d'angle de rotation (7) qui est réalisé pour émettre un signal de mesure (8, 8a, 8b) lors de la rotation du rotor, dans lequel le signal de mesure (8, 8a, 8b) émis par le capteur d'angle de rotation (7) ou déduit de celui-ci est analysé et évalué quant à la présence d'anomalies mettant en évidence des erreurs, dans lequel le signal de mesure (8, 8a, 8b) est comparé, dans la plage de temps ou dans la plage de fréquences, à un signal de mesure de référence (10, 10a, 10b), et qu'en cas d'écart du signal de mesure (8, 8a, 8b) par rapport au signal de mesure de référence (10, 10a, 10b) d'un seuil de tolérance (9, 9a), un signal d'identification d'erreur est généré, **caractérisé en ce que** l'unité d'entraînement est un servomoteur avec un servorégulateur, que le capteur d'angle de rotation (7) est le capteur d'angle de rotation prévu de manière inhérente dans le servomoteur, dont les signaux sont pris en compte dans le servorégulateur pour faire tourner de manière commandée le rotor, et que le signal de mesure de référence (10, 10a, 10b) est un signal de mesure de référence relevé dans l'état neuf de la machine (1).

2. Procédé selon la revendication 1, **caractérisé en ce que** le signal de mesure (8a, 8b) est obtenu par déduction du signal émis par le capteur d'angle de rotation (7).

3. Procédé selon la revendication 1 ou 2, **caractérisé en ce que** le signal de mesure (8, 8a, 8b) est analysé dans la plage de temps et/ou dans la plage de fréquences.

4. Procédé selon la revendication 1, **caractérisé en ce que** la machine (1) comprend une pluralité d'unités d'entraînement (3), que les signaux de mesure (8, 8a, 8b) émis par les capteurs d'angle de rotation (7) desdites unités d'entraînement (3) ou déduits de ceux-ci sont analysés et sont évalués quant à la présence d'anomalies mettant en évidence des erreurs.

5. Procédé selon la revendication 4, **caractérisé en ce que** les signaux de mesure (8, 8a, 8b) sont comparés respectivement à un signal de mesure de référence (10, 10a, 10b) qui leur est associé, et qu'en cas d'écart d'au moins un signal de mesure (8, 8a, 8b) par rapport au signal de mesure de référence (10, 10a, 10b) qui lui est associé d'un seuil de tolérance (9, 9a), un signal d'identification d'erreur et/ou un signal de localisation caractérisant l'unité d'entraînement (3) respective sont générés.

6. Procédé selon l'une quelconque des revendications précédentes, **caractérisé en ce que** le signal de mesure (8, 8a, 8b) est analysé en continu ou à intervalles réguliers.

7. Procédé selon l'une quelconque des revendications précédentes, **caractérisé en ce que** des valeurs d'amplitude de fractions spectrales du signal de mesure (8, 8a, 8b) sont comparées à des valeurs de seuil associées auxdites fractions spectrales, et qu'en cas de dépassement d'au moins une valeur de seuil par la valeur d'amplitude associée à ladite valeur de seuil, le signal d'identification d'erreur est généré.

8. Procédé selon l'une quelconque des revendications précédentes, **caractérisé en ce que** la variation dans le temps du signal de mesure (8, 8a, 8b) est déterminée sur la base de plusieurs signaux de mesure de référence (10, 10a, 10b) relevés par le passé à des moments différents sur au moins une partie de la durée de fonctionnement de machine.

9. Procédé selon l'une quelconque des revendications précédentes, **caractérisé en ce qu'**une unité de commande (5) est associée à chaque unité d'entraînement (3) ou à un groupe d'unités d'entraînement (3), et que le signal de mesure (8, 8a, 8b) à évaluer est fourni par l'unité de commande (5).

10. Procédé selon l'une quelconque des revendications précédentes, **caractérisé en ce que** le rotor de l'unité d'entraînement (3) est accéléré depuis une première vitesse de rotation sur une deuxième vitesse de rotation, que le signal de mesure est analysé dans la totalité de la plage de vitesses de rotation traversée pour définir une plage de vitesses partielles dans laquelle apparaissent des anomalies mettant en évidence des erreurs, et qu'ensuite un ou plusieurs signaux de mesure, qui sont associés à ladite plage de vitesses partielles, sont analysés sur le plan spectral dans la plage de fréquences.

11. Procédé selon l'une quelconque des revendications précédentes, **caractérisé en ce que** l'unité d'entraînement (3) est pilotée de telle manière qu'il en découle une modification de la vitesse de rotation du rotor, en particulier une modification par impulsions de la vitesse de rotation, et que le signal de mesure (8, 8a, 8b) résultant de ladite modification par impulsions de la vitesse de rotation du rotor est analysé.

12. Procédé selon l'une quelconque des revendications précédentes, **caractérisé en ce que** la contrainte de l'unité d'entraînement (3) est modifiée par pilotage d'une partie de machine entraînant une modification de contrainte, et que le signal de mesure (8, 8a, 8b) déterminé lors de ladite modification de contrainte de l'unité d'entraînement (3) est analysé.

13. Dispositif d'identification d'erreurs dans une machine (1) comprenant au moins une unité d'entraînement (3) électrique pour entraîner un module (2a - 2e) de la machine (1), dans lequel est associé à l'unité d'entraînement (3) un capteur d'angle de rotation (7) qui est réalisé pour émettre un signal de mesure (8, 8a, 8b) lors de la rotation du rotor, dans lequel un module d'analyse (4) est prévu, au moyen duquel le signal de mesure (8, 8a, 8b) émis par le capteur d'angle de rotation (7) ou déduit de celui-ci est analysé et est évalué quant à la présence d'anomalies mettant en évidence des erreurs, **caractérisé en ce que** l'unité d'entraînement est un servomoteur avec un servorégulateur, que le capteur d'angle de rotation (7) est le capteur d'angle de rotation prévu de manière inhérente dans le servomoteur, dont les signaux sont pris en compte dans le servorégulateur pour faire tourner de manière commandée le rotor, et que le module d'analyse (4) est réalisé pour déterminer la variation dans le temps du signal de mesure (8, 8a, 8b) sur au moins une partie de la durée de fonctionnement de machine sur la base de plusieurs signaux de mesure de référence (10, 10a, 10b) relevés par le passé à des moments différents.

14. Dispositif selon la revendication 13, **caractérisé en ce que** le module d'analyse (4) est réalisé pour évaluer le signal de mesure (8, 8a, 8b) dans la plage de temps ou dans la plage de fréquences.

15. Dispositif selon la revendication 13 ou 14, **caractérisé en ce que** le signal de mesure (8, 8a, 8b) est comparé à un signal de mesure de référence (10, 10a, 10b), dans lequel le module d'analyse (4) est réalisé pour déterminer l'écart du signal de mesure par rapport au signal de mesure de référence (10) et pour générer un signal d'identification d'erreur quand l'écart dépasse un seuil de tolérance (9, 9a).

16. Dispositif selon la revendication 13, **caractérisé en ce que** la machine (1) comprend une pluralité d'unités d'entraînement (3), auxquelles est associé respectivement un capteur d'angle de rotation (7), qu'un ou plusieurs modules d'analyse (4) sont prévus, au moyen desquels les signaux de mesure (8, 8a, 8b) émis par les capteurs d'angle de rotation (7) sont analysés et au moyen desquels les signaux de mesure (8, 8a, 8b) sont analysés quant à la présence d'anomalies mettant en évidence des erreurs.

17. Dispositif selon la revendication 16, **caractérisé en ce que** les signaux de mesure (8, 8a, 8b) sont comparés respectivement à un signal de mesure de référence (10, 10a, 10b) associé au signal de mesure (8, 8a, 8b) respectif par l'au moins un module d'analyse (4).

18. Dispositif selon la revendication 17, **caractérisé en ce que** le module d'analyse (4) est réalisé pour déterminer les écarts des signaux de mesure (8, 8a, 8b) par rapport aux signaux de mesure de référence (10, 10a, 10b) respectifs et pour générer un signal d'identification d'erreur et/ou pour générer un signal de localisation caractérisant l'unité d'entraînement (3) respective quand au moins un écart déterminé dépasse un seuil de tolérance (9, 9a).

19. Dispositif selon l'une quelconque des revendications 13 à 18, **caractérisé en ce qu'**une unité de commande (5) est associée à chaque unité d'entraînement (3) ou à un groupe d'unités d'entraînement (3), et que le signal de mesure (8, 8a, 8b) à évaluer est fourni par l'unité de commande (5).

20. Dispositif selon l'une quelconque des revendications 13 à 19, **caractérisé en ce que** le module d'analyse (4) est réalisé de telle manière que le rotor de l'unité d'entraînement (3) est accéléré depuis une première vitesse de rotation sur une deuxième vitesse de rotation, que le signal de mesure (8, 8a, 8b) est analysé dans la totalité de la plage de vitesses de rotation traversée pour définir une plage de vitesses partielles, dans laquelle des anomalies mettant en évidence des erreurs apparaissent, et qu'enfin un ou plusieurs signaux de mesure (8, 8a, 8b), qui sont associés à ladite plage de vitesses partielles, sont analysés sur le plan spectral dans la plage de fréquences par le module d'analyse (4).

21. Dispositif selon l'une quelconque des revendications 13 à 20, **caractérisé en ce que** le module d'analyse (4) est réalisé de telle manière que l'unité d'entraînement (3) est pilotée de telle manière qu'il en découle une modification de la vitesse de rotation, en particulier une modification par impulsions de la vitesse de rotation, et que le signal de mesure (8, 8a, 8b) résultant de ladite modification par impulsions de la vitesse de rotation est analysé par le module d'analyse (4).

22. Dispositif selon l'une quelconque des revendications 13 à 21, **caractérisé en ce que** le module d'analyse (4) est réalisé de telle manière que la contrainte de l'unité d'entraînement (3) est modifiée par pilotage d'une partie de machine provoquant une modification de contrainte, et que le signal de mesure (8, 8a, 8b) déterminé lors de ladite modification de contrainte de l'unité d'entraînement (3) est analysé.
